Europäisches Patentamt

European Patent Office

Office européen des brevets

(11) Publication number : **0 586 200 A1**

# (12) EUROPEAN PATENT APPLICATION

(21) Application number : 93306799.3

(51) Int. Cl.⁵ : **G01N 31/22**

(22) Date of filing : 26.08.93

(30) Priority : **31.08.92 US 938388**

(43) Date of publication of application :
**09.03.94 Bulletin 94/10**

(84) Designated Contracting States :
**DE FR GB**

(71) Applicant : **PYMAH CORPORATION**
**P.O. Box 1114, 86 Route 206**
**Somerville, New Jersey 08876 (US)**

(72) Inventor : **Larsson, Raymond P.**
**146 West Glen Road**
**Denville, New Jersey 07834 (US)**
Inventor : **Ignacio, Ramon T.**
**2306 Rebecca Street**
**West Covina, California 91792 (US)**
Inventor : **Nieves, Judith**
**590 Mt Prospect Avenue**
**Newark, New Jersey 07104 (US)**

(74) Representative : **Belcher, Simon James et al**
**Urquhart-Dykes & Lord Tower House Merrion**
**Way**
**Leeds LS2 8PA (GB)**

(54) Detection of glutaraldehyde.

(57) An indicator composition for detecting the presence of glutaraldehyde in wash water at concentrations of about 5 to about 20 ppm, comprises a sulphite and a pH indicator where the pH indicator is cresolphthalein. The ratio of sulphite to cresolphthalein is about 3 :1 to about 5 :1, and the composition is used in an amount such that the concentration of sulphite in the glutaraldehyde wash solution to be tested is about 0.6 $mg.ml^{-1}$ to about 1.4 $mg.ml^{-1}$.

EP 0 586 200 A1

This invention relates to the detection of glutaraldehyde, especially in solutions used to rinse objects which have been sterilised or disinfected with an alkaline glutaraldehyde solution. The invention relates to indicator compositions, devices which contain indicator compositions, and methods of detecting glutaraldehyde.

Glutaraldehyde is commonly used to sterilize or disinfect instruments and other medical devices which cannot be subjected to the high temperatures involved in steam sterilization. It is preferred as a sterilant to ethylene oxide because of the long turn around time required for ethylene oxide sterilization. Rapid low temperature methods of disinfecting and sterilizing surgical items rely on glutaraldehyde solutions. The preferred disinfectants are alkaline glutaraldehyde solutions ("AGS").

Commercially, AGS is usually supplied as a 2% glutaraldehyde in water solution. After sterilization the items which have been exposed to the AGS must be rinsed free of glutaraldehyde. A number of indicators have been developed to test the effectiveness of the glutaraldehyde disinfecting solution.

GB-A-2085583 discloses an indicator comprising a mixture of at least one sulphite and a pH indicator, the pH indicator being chosen such that the colour change point of the indicator lies within the range of the change of pH value of the sulphite which occurs on exposure of the sulphite to glutaraldehyde solution. The reaction of glutaraldehyde with a sulphite or bisulphite results in the formation of NaOH thereby raising the pH of the solution. The objective is to have an indicator useful in determining when the glutaraldehyde concentration of the solution falls below 1.5%. The pH indicators disclosed are phenol violet and thymol blue.

US-3945798 discloses a method of detecting low levels of formaldehyde in a gaseous environment utilizing a sulphite and pararosaniline or its acid salt as the pH indicator. A test element is disclosed which comprises a support having coated thereon a formaldehyde sensitive layer. The formaldehyde sensitive layer comprises an inert (to formaldehyde) formaldehyde-permeable binder which stabilizes sulphite ion against aerial oxidation having sulphite ions and pararosaniline or acid salt thereof dispersed therein. Preferably the binder is gelatin. Upon exposure to formaldehyde, a visible, spectrophotometrically quantifiable dye is formed. In tests with other aldehydes including acetaldehyde, propionaldehyde, butyraldehyde, benzaldehyde, crotonaldehyde, fural, chloral hydrate, acrolein and other compounds, only propionaldehyde gave the same results as formaldehyde.

US-4328182 discloses an indicator to indicate the completion of sterilization when formaldehyde vapour is used as the sterilant. The indicator comprises a carrier, at least one amino acid and a pH indicator. The device relies on the Sorenson reaction in which the formaldehyde reacts with the amino acid to lower the pH value of the acid. The pH indicator is chosen so that the change point of the pH indicator lies within the range of the change of pH value of the amino acid which occurs on the exposure of the amino acid to formaldehyde. Bromcresol purple was chosen as the indicator.

US-4521376 discloses a device to determine whether the concentration of a disinfectant/sterilant solution of glutaraldehye exceeds a predetermined value. The device comprises an indicator medium impregnated with a sulphite compound and amino acid or an ammonium salt. The device is said to be responsive to glutaraldehyde concentrations as low as 0.75%.

After sterilizing a material with glutaraldehyde it is necessary to rinse the material to ensure that it is free of glutaraldehyde. A target for glutaraldehyde concentration in the rinse solution is 20 ppm or less, preferably 10 ppm or less. At those concentrations of glutaraldehyde in the rinse water, materials sterilized or disinfected with glutaraldehyde are deemed to be sufficiently free of glutaraldehyde contaminant to be safe to use in surgical or other invasive procedures. The indicators of the prior art are not sufficiently sensitive to detect such low levels of glutaraldehyde in solution.

It has surprisingly been found that an indicator sufficiently sensitive to detect glutaraldehyde concentrations in water solution as low as 5 ppm can be prepared utilizing a sulphite and a pH indicator wherein the pH indicator is cresolphthalein.

In one aspect, the invention provides glutaraldehyde indicator composition comprising a filler, a sulphite and a pH indicator comprising cresolphthalein, the ratio of sulphite to pH indicator being about 3:1 to about 5:1; said composition being suitable for measuring glutaraldehyde concentrations in the range of about 5 to 20 ppm when a predetermined amount of the composition is dissolved in sufficient glutaraldehyde containing water such that the concentration of sulphite in water is about 0.6 to about 1.4 mg.ml$^{-1}$.

In another aspect, the invention provides a method of detecting glutaraldehyde in solution, which comprises dissolving in the solution an indicator composition comprising a filler, a sulphite and a pH indicator comprising cresolphthalein, the ratio of sulphite to pH indicator being about 3:1 to about 5:1; the concentration of sulphite in the solution being from about 0.6 to about 1.4 mg.ml$^{-1}$.

The indicator composition can be provided as a loose uncompressed powder or as a tablet. The tablet of a predetermined composition and weight can be added to about 5 to 10 ml of rinse water to be tested. Depending upon the composition and amount of rinse water used the indicator composition will detect glutaraldehyde in the rinse water at levels as low as 5 ppm.

The indicator composition may be deposited onto a substrate in the form of an ink and contacted with a predetermined amount of rinse water.

A solution of the indicator composition can be imprinted on a wettable substrate. When wetted with a measured amount of rinse solution the substrate will exhibit a colour change where the rinse water contains as little as 5 ppm glutaraldehyde.

When a tablet is formed of the indicator composition, the tablet can comprise at least one tabletting aid in combination with the indicator composition. The tabletting aids useful in the practice of this invention are preferably, water soluble or water dispersible compounds. Examples of suitable tabletting aids include polyvinylpyrrolidone and polyvinyl alcohol, and mixtures thereof. Any composition which aids in increasing the cohesive strength of the tablet, and which will readily permit the dissolution of the tablet is suitable as the tabletting aid in the practice of this invention, provided that it is neutral with respect to pH and unreactive with respect to the indicator composition. In order that the composition will have sufficient bulk for convenient use, it is preferable to include at least one filler. Examples of suitable fillers include mannitol, maltose, galactose, lactose, dextrose, hydroxymethyl cellulose, hydroxypropyl cellulose and mixtures thereof. Preferably, the fillers are water soluble or water dispersible and unreactive with respect to both the sulphite and the pH indicator; the composition may however include some insoluble filler. Examples of suitable insoluble fillers include $TiO_2$ and microcrystalline cellulose (cellulose powder), and mixtures thereof. In a preferred embodiment, a mixture of mannitol, cellulose powder and polyvinyl alcohol are used together as the fillers and tabletting aid.

The amount of filler used is not critical. The quantity used is fixed by practical considerations including the desired size (weight) of the tablet. The filler can comprise about 50 to about 95% by weight of the composition, for example about 80 to about 90%. Some insoluble filler can be incorporated in combination with the soluble filler. Surprisingly, the presence of insoluble filler makes the colour "signal" more readily discernable. The ratio of soluble filler to insoluble filler can be about 1:1 to about 12:1, preferably 5:1 to about 10:1, more preferably about 8:1 to about 10:1. The filler used in the composition can include from about 85% to about 95%, preferably 90 to 95%, of water soluble filler, the balance being insoluble filler. As used in the specification, the term "soluble filler" means a substance, inert to the sulphite and pH indicator and soluble in water. As used in the specification, the term "insoluble filler" means a substance, inert to the sulphite and pH indicator and insoluble in water. The term "indicating system" as used in the specification means the combination of sulphite and cresolphthalein. Wherever the term "filler" is used in the specification unmodified by either "soluble" or "insoluble", it means soluble filler which can, but need not, contain a minor amount of insoluble filler.

The water soluble tabletting aid can be used as the filler. Generally, cost considerations and the lower solubility of the tabletting aid mitigate against its use as the filler. As used in the specification, the term "tabletting aid" means a compound useful in increasing the cohesive strength of the tablet. Without such aids the tablet may fall apart in storage or handling. It will be appreciated that the tabletting aid is superfluous where the filler can be compacted into a tablet of sufficient strength in the absence of the tabletting aid.

Any water soluble sulphite or bisulphite may be used in the composition. Preferably the sulphite is an alkali metal sulphite such as sodium sulphite or potassium sulphite, or a water soluble alkaline earth metal sulphite, such as magnesium sulphite. The term "sulphite" as used hereinafter in the specification encompasses both the sulphites and bisulphites, and means an alkali metal or water soluble alkaline earth sulphite, as well as ammonium sulphite and quaternary ammonium sulphites. Examples of suitable sulphites include sodium sulphite, potassium sulphite, magnesium sulphite, ammonium sulphite, trimethylbenzylammonium sulphite, sodium bisulphite, magnesium bisulphite, potassium bisulphite and ammonium bisulphite.

Preferred compositions in tablet form can comprise polyvinylpyrrolidone or polyvinyl alcohol as a tabletting aid, a mixture of cellulose powder and a soluble filler such as mannitol, and sodium sulphite.

A typical tabletting composition comprises 5 grams of mannitol as soluble filler, 0.5 grams of water insoluble cellulose powder filler and 0.1 grams of polyvinyl alcohol tabletting aid as the inert constituents of the composition, in combination with 0.2 grams of sodium sulphite and 0.05 grams of cresolphthalein. After thorough blending of the ingredients, tablets of about 200 mg each can be prepared in a tabletting machine.

In use, the 200 mg tablet is dissolved in about 10 ml of rinse water to be tested. While lesser amounts of water may be used with the 200 mg tablet, there can be a decrease in sensitivity. For example where 5 ml of rinse water is used, the indicator composition is sensitive to glutaraldehyde concentrations of 20 ppm or more, while when 10 ml of water is used, the indicator composition is sensitive to glutaraldehyde concentrations in the rinse water as low as 5 ppm. Use of greater amounts of water results in a decrease of intensity of the colour change making readability difficult.

Generally, the ratio of sulphite to pH indicator should be about 3:1 to about 5:1; preferably about 3.5:1 to about 4.5:1, for example 4:1. The sensitivity of the indicator composition is dependent in part upon sulphite concentration in the rinse water to be tested. If the sulphite concentration is too high the sulphite alone is sufficiently basic to cause the pH indicator to change colour. If the sulphite concentration is too low the colour generated is not sufficiently intense to be read with ease. In practice, it is preferred that the composition of the tablet, the size of the tablet selected and the amount of rinse water used in the test, are such that the concentration of sulphite in the rinse water to be tested is about 0.6 mg.ml$^{-1}$ to about 1.4 mg.ml$^{-1}$ of rinse solution. For example, the concentration of sulphite in rinse water to be tested might be about 0.7 mg.ml$^{-1}$.

Illustrative tablet formulations are set out in Table I.

## TABLE I

### Formula A

| COMPONENT | WEIGHT (g) |
|---|---|
| Sodium sulphite | 0.2 |
| Cresolphthalein | 0.05 |
| Cellulose powder | 0.5 |
| Mannitol | 5.0 |
| Polyvinyl alcohol | 0.1 |

### Formula B

| COMPONENT | WEIGHT (g) |
|---|---|
| Sodium sulphite | 0.2 |
| Cresolphthalein | 0.05 |
| Cellulose powder | 0.5 |
| Hydroxypropyl cellulose | 5.0 |
| Polyvinylpyrrolidone | 0.1 |

The mixture is divided into 200 mg portions and tabletted in a tabletting press. In this form it is ready for use with 10 ml of rinse water to be tested, and will readily detect glutaraldehyde concentrations as low as 5 ppm.

In selecting the pH indicator useful in the practice of this invention, an indicator with an observed colour change in the pH range of about 8.0 to about 10.0 is required. A number of pH indicators in that range were tested in the compositions of this invention the results are shown below. The criteria for selecting an indicator are that it must be sensitive to glutaraldehyde concentrations of 20 ppm or less and the colour change must be of sufficient intensity to be read with ease.

Formulations utilizing the general compositions of Formula A in Table I were prepared substituting different pH indicators for the cresolphthalein. The results are shown in Table II.

TABLE II

| INDICATOR | pH RANGE | RESULTS |
|---|---|---|
| Ethyl-bis-2,4-dinitro phenyl acetate | 7.5-9.1 | Faint colour change at 5 ppm; solubility problem |
| Orange-I | 7.6-8.9 | No observable change up to 50 ppm |
| Propyl-$\alpha$-naphthyl orange | 7.4-8.9 | Colour change at 50 ppm |
| m-Cresol purple | 7.4-9.0 | No change at 5 ppm |
| Hessian bordeaux | 8.0-9.0 | No change at 20 ppm |
| p-Xylenol blue | 8.0-9.6 | No change at 5 ppm |
| Thymol blue | 8.0-9.6 | Difficult to detect change |
| Phenyl tetraiodophenolphthalein | 8.3-9.7 | Some colour change at 50 ppm |
| $\alpha$-naphtho benzene | 8.2-10.0 | No change at 5 ppm |
| Phenolphthalein | 8.2-10.0 | Pink at 20 ppm |
| Thymolphthalein | 9.3-10.5 | No change at 5 ppm |
| Bromcresol purple | 5.2-6.8 | Slight change; difficult to read |
| Bromthymol blue | 6.0-7.6 | Slight colour in water |
| Brilliant yellow | 6.4-8.0 | Some change at 200 ppm |
| Cresolphthalein | 8.2-9.8 | Strong colour change 5 to 20 ppm |

Of the pH indicators tested, only cresolphthalein is an acceptable indicator. While phenolphthalein exhibited a change in the desired range, its colour quickly reverted as a result of reaction with $CO_2$ in the air, making it unsuitable for the purpose of this invention.

When the composition is supplied as a loose powder, no tabletting aid per se is required. The filler will preferably include some insoluble filler, for example cellulose powder, and a major amount of soluble filler, for example mannitol or hydroxypropyl cellulose.

The indicator composition may be deposited onto a substrate in the form of an ink and contacted with a predetermined amount of rinse water. The ink should comprise a water soluble binder, a sulphite and a pH indicator. Examples of suitable binders for the ink include water soluble compounds and include hydroxypropyl cellulose, hydroxyethyl cellulose, hydroxymethyl cellulose, polyvinylpyrrolidone, polyvinyl alcohol and mixtures thereof.

The ink can be prepared by dissolving at least part of the binder and the indicator composition in a suitable solvent as a vehicle. Preferably, the solvent comprises. However, a non-aqueous solvent can be used, for example to aid in rapid drying of the ink. The non-aqueous solvent must be a solvent for the binder and pH indicator and be non-reactive with the indicating system of this invention. Examples of suitable solvents include water miscible alcohols, for example methanol, ethanol, propanol, propanol, butanol, isobutanol and amyl alcohol. A blend of solvents, such as a blend of water and a non-aqueous solvent which soluble is in water, can be used.

An insoluble filler can be included in addition to the soluble ink components. The function of the filler is to enhance the intensity of the colour change of the pH indicator. The filler must be inert to the other ink components and is preferably white in appearance. Examples of suitable insoluble fillers for the ink include titanium dioxide and microcrystalline (powdered) cellulose.

The ink is preferable deposited on a substrate wettable by the ink which does not readily absorb the water or alcohol vehicle for the ink. Examples of suitable wettable materials include PVC and cellulose acetate. While absorbent substrates such as paper can be used, they are not preferred because a chromatographic effect can result in partial separation of the reactants. In any event papers which are filled with clays or other components which will affect the pH of the system should not be used. Generally, any material which is nonreactive with the ink components upon which the ink composition can be printed can be suitable as the substrate.

In use, the ink coated substrate containing a predetermined amount of sulphite is contacted with a predetermined amount of rinse water. The ink can be dissolved into water by agitation, for example by shaking. As in the case of the tablet, the resulting solution must contain about 0.6 to about 1.4 mg.ml$^{-1}$ of sulphite. The ratio of sulphite to pH indicator is as stated above in the case of the tablet. In one embodiment the ink is deposited within a blister pack type disposable syringe.

US-3768974, US-3732079 and US-3701633 disclose disposable syringes having a bulbar cavity which are useful in the practice of this invention. The bulbar cavity is formed of a resilient plastic and is constrictable in volume by the application of finger pressure so that, upon release of pressure, a predetermined amount of liquid is drawn into the cavity. An appropriate device contains a colorimetric indicator material in dried form which, when dissolved in the water to be tested, produces a given distinguishable colour change. The disposable syringe is made of a transparent plastic sheet forming a bulb and containing a tablet or printed "spot" of colorimetric reagent as described above corresponding to the quantity of water which can be drawn into the syringe. When a sample of water is drawn into the syringe, and the device is shaken, the colorimetric indicator material is dissolved and produces a colour change thereby indicating the presence of glutaraldehyde in the concentration range to be tested.

Embodiments of a syringe device for dispensing the composition of the invention will now be described, by way of example, with reference to the accompanying drawings, in which:

Figure 1 is a perspective view of one form of syringe device.

Figure 2 is a side elevation view of the device.

Figure 3 is an elevation view from the inlet tube end of the device.

Figure 4 is an elevation view of the end opposite the inlet tube.

Figure 5 is a top elevation view of the device.

Figure 6 is a bottom elevation view of the device.

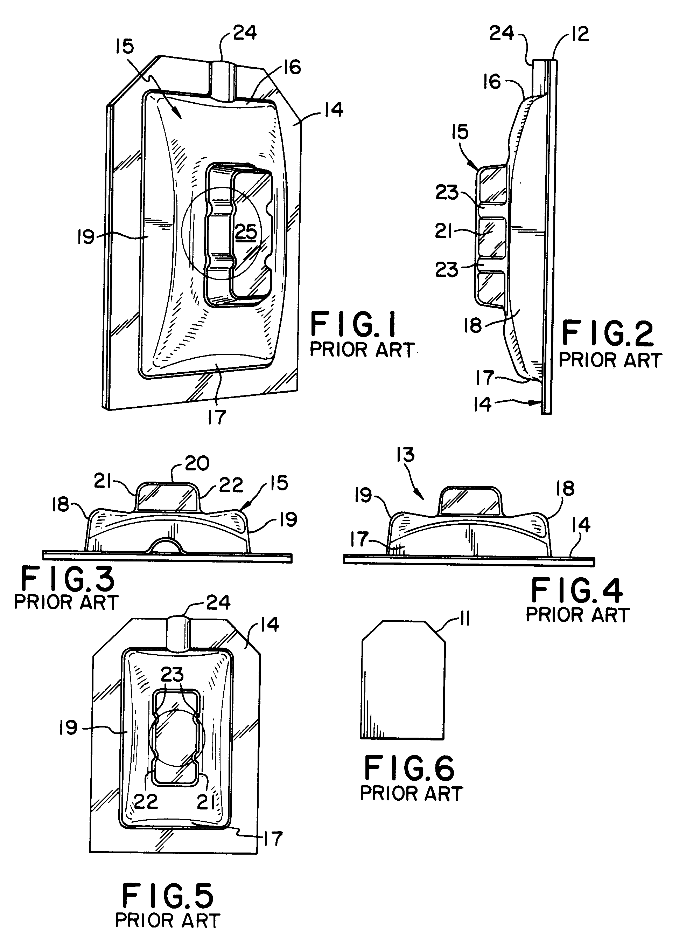

Referring now to the drawings, Figure 1 shows a disposable syringe which comprises a rigid base 11, which can be a rigid cardboard member coated with a plastic material 12, to which is adhered a formed blister or bulb 13 of transparent plastic, the blister being adhered by heat or adhesive sealing at the outwardly projecting flange 14, of the blister 13 to the base 11, to form a container which can hold water or other liquid. The bulb 13 consists of a rectangular, pyramidal-shaped, deformable plastic body 15, with its walls 16, 17, 18 and 19 tapering upwardly and integral with the walls of a rectangular turret 20 which constitutes the "button" upon which finger pressure is applied in the operation of the syringe.

As shown in Figure 2, the side-walls 21 and 22 of the turret 20 are stiffened by vertical indented flutes 23. The flutes 23 strengthen the turret structure so that it is downwardly movable as a unit when pressure is applied, thereby constricting the total volume of the bulb, 13. When pressure is released the turret is restored to its original position as a result of the inherent resiliency of the plastic resin material from which the bulb, 13 is constructed. Examples of suitable resins include polyvinyl chloride, polystyrene and polypropylene. The thickness of the sheet material from which the bulb is formed is preferably about 6 to about 10 mils.

An inlet tube 24, connecting the internal bulb volume to the outer ambient surroundings is formed by moulding a rounded groove transversely into the flange 14, of the bulb 13, adjacent to and extending through endwall 16. This rounded groove forms a tubular opening into the internal bulb volume when the bulb 13 is sealed to the rigid base 11, at the flange 14. An indicator spot or stripe 25, is imprinted onto the rigid base 11, with a suitable ink composition. One such composition comprises a binder, a sulphite or bisulphite and cresolphthalein. The formulation of the ink and the quantity deposited on the rigid base 11 will depend upon the void volume of the syringe. The term void volume as used in the specification and claims means the volume of air expelled from the bulbar cavity upon constriction of the bulb, and is substantially equal to the volume of liquid which will be drawn into the syringe when pressure is released.

In using the syringe, an amount of rinse solution to be tested is drawn into the syringe. After shaking until substantially all of the ink is dissolved, the presence of glutaraldehyde is observed as indicated above.

A typical ink formulation is shown in Table III

TABLE III

| COMPONENT | WEIGHT (g) |
| --- | --- |
| Sodium sulphite | 0.2 |
| Cresolphthalein | 0.05 |
| Titanium dioxide | 0.2 |
| Polyvinylpyrrolidone | 0.1 |

The mixture is dissolved into 1 ml of water. In use about 3.5 ml of the ink solution is imprinted onto the backing of the disposable syringe of the type described above, which has a void volume of 1 ml. When 1 ml of glutaraldehyde rinse solution is taken up for testing and shaken to redissolve the ink, the concentration of sulphite in test solution is about 0.7 mg.ml$^{-1}$.

It will be appreciated that any formulation for the ink may be utilized provided that (1) the reactive ink components are fully redissolved in a predetermined amount of the glutaraldehyde test solution, (2) the titre of the solution is such that the concentration of sulphite in the solution is about 0.6 mg.ml$^{-1}$ to about 1.44 mg.ml$^{-1}$, and (3) the ratio of the sulphite to pH indicator is about 5:1 to about 3:1.

Any suitable binder can be used. Although the concentration of binder is not critical a sufficient amount must be used to bind the ink to the backing upon which it is to be deposited, while at the same time not being present in amounts which make complete solution of the ink difficult. The binder can be used at about 8% to about 30%, based on the weight of the ink components exclusive of the solvent component. Preferably the binder is used at about 10 to about 20%, more preferably at about 10 to about 15%. The solvent is preferably water.

While it is preferred that the ink be water based so that the sulphite will be dissolved, but the solvent may comprise an organic solvent which is not a solvent for the sulphite. In that event, however the ink will be a slurry of the sulphite in the solvent, and it is preferred that the ink be prepared by ball mill grinding of the components. Where the solvent used as the vehicle for the ink is not water based, the binder must have sufficient water solubility to dissolve or disintegrate in the rinse water sample to permit dissolution of the reactive components of the ink. By way of example, polyvinylpyrrolidone is soluble in ethanol as is the pH indicator, while the sulphite is not. Such an ink would be operative, however, since the ink spot or stripe will dissolve in the glutaraldehyde solution to be tested.

It will be appreciated that the addition of minor amounts of water soluble thickeners into the ink composition will serve to thicken the ink, and have no adverse effect on its effectiveness. A mixed solvent, for example one which comprises ethanol and water, may be used to increase the rate of evaporation of the solvent from the ink. A suitable composition of the solvent mixture is about 30 to about 90% by weight of water and about 70 to about 10% alcohol by weight of the solvent, for example about 30 to about 70% water and about 70 to about 30% alcohol. Any water miscible alcohol can be used instead of ethanol, the preferred alcohols being the lower molecular weight, water miscible alcohols.

Other suitable organic solvents include dimethyl formamide, dimethyl sulphoxide, tetrahyrofuran and a propylene glycol methyl ether such as that sold by Unical Corporation under the trade mark Propasol M. It will be appreciated that the sulphite is soluble to at least some degree in the DMSO and DMF.

The reactive components of the indicator system may be deposited onto a substrate and dried. In use the substrate is dipped into the test solution and the colour change if any is noted.

The concentration of sulphite and ratio of sulphite to pH indicator in the dipping solution will be as described above. The solution absorbed by the substrate will have the same titre as the dipping solution. After drying and dipping into the test solution the concentration of the sulphite and ratio of sulphite to pH indicator will be in the required range, and where sufficient glutaraldehyde exists in the rinse solution to be tested, that is greater than 5 ppm, a colour change will be observed. The principle on which this embodiment of the invention operates is that the substrate by virtue of its inherent characteristics will absorb a fixed amount of solution containing the sulphite and pH indicator. After drying the substrate contains the required amount of sulphite and pH indicator so that upon insertion into a rinse solution to be tested it will absorb the same amount of liquid as it did of the dipping solution. Consequently, the test solution will contain the requisite concentration and ratio of the indicator system components to detect the presence of glutaraldehyde in the 5 to 20 ppm range.

In this particular aspect of the invention, it has been found that the pH of the solution absorbed by the substrate will be affected by $CO_2$ in the air and any signal will rapidly disappear unless steps are taken to avoid this effect. The effect of ambient $CO_2$ can be minimized by insulating the reactants from the air using a binder which is preferably a mixture of a water soluble material and a water insoluble material. For example, if about 0.05 grams of ethylhydroxyethyl cellulose is added to the ink formulation of Table III, the formulation when dissolved in 1 ml of water can be used as the dipping solution to prepare an impregnated substrate suitable for use in detecting glutaraldehyde at concentrations between 5 to 20 ppm. Examples of suitable water insoluble binders include methyl cellulose, ethyl cellulose , ethylhydroxyethyl cellulose and mixtures thereof. These water insoluble binders must be soluble in a solvent which will dissolve the water soluble binders.

The substrate can be prepared by dissolving 0.2 grams of polyvinylpyrrolidone and 0.1 grams of ethylhydroxyethyl cellulose in 1 ml of the propylene glycol methyl ether sold by Unical Corporation under the trade mark Propasol M, and saturating about 10 grams of microcrystalline cellulose with the solution. The saturated microcrystalline cellulose is drained free of excess liquid and applied to a backing, such as a PVC strip, with a doctor knife at a thickness of about 20 mils. The composition is allowed to dry. The resulting composition can be used as the substrate for the above described indicator.

This aspect of the invention may be generally described as impregnating a substrate material with a solution of a water soluble and water insoluble binder blend and drying the substrate material. The presence of the water insoluble binder prevents dissolution of the water soluble binder, and the presence of the water soluble binder in an amount which is greater than that of the water insoluble binder permits the substrate to absorb the dipping solution, and subsequently, the test solution. The binders reduce the rate of reaction of ambient $CO_2$ with pH indicator resulting in the observed signal being retained long enough to permit an accurate reading. As used in the specification and claims the term "dipping solution" means a solution comprising the indicating system useful in preparing substrates saturated therewith which after drying can subsequently be used to test for glutaraldehyde.

Aa substrate can be coated with an ink in which the sulphite is magnesium sulphite. It has been found that magnesium sulphite is less susceptible to reaction with ambient $CO_2$ than the sodium salts. In this embodiment rather than applying a solution of the ink onto the paper sufficient magnesium sulphite is incorporated so that the ink is a slurry containing magnesium sulphite. Furthermore, to compensate for the lower solubility of the magnesium sulphite the ratio of sulphite to pH indicator in the slurry is about 7:1 to about 12:1, for example 10:1.

The slurry comprises magnesium sulphite in a solution of the pH indicator and solvent together with a water soluble binder. Additionally, a water insoluble filler can be included. Depending on the binder, the solvent can be water or water in combination with a water miscible organic solvent such as ethanol. It is within the scope of this invention to utilise a minor amount of water insoluble binder such as ethylhydroxyethyl cellulose (EHEC). The water insoluble binder must be soluble in a solvent miscible with the water or water/alcohol solvent.

A typical solvent for the water insoluble binder can be alcohol or the propyleneglycol methyl ether sold by Unical Corporation under the trade mark Propasol M.

In preparing the slurry, a "varnish" is first prepared using the water soluble binder in a solvent. The other components are blended with about one-half of the required varnish and ground in a ball mill. The usual milling time for such inks is about 10 to 14 hours, for example about 12 hours. The remainder of the varnish is then added to the ink slurry and further milled until the slurry is homogeneous, for example 30 minutes to two hours; typically, one hour.

The slurry is then applied to a substrate such as a polymer film, metal film or paper. Examples of suitable substrates include polyvinyl chloride, aluminum foil, ethylene glycol/ terephthalate polyester, polypropylene and paper.

A typical varnish composition is shown in Table IV.

TABLE IV

| COMPONENT | WEIGHT (g) |
|---|---|
| Methocel E50[1] | 50 |
| Methocel F50[2] | 50 |
| Water | 1875 |
| Ethanol | 1250 |

1 - Hydroxypropyl cellulose; 28-30 wt.% methoxy, 5-12% hydroxy-propyl; Viscosity of 2 wt.% solution, 50 cps; trade mark of Dow Chemical U.S.A.
2 - Hydroxypropyl cellulose; 22-30 wt.% methoxy, 5-8% hydroxy propyl; Viscosity of 2 wt.% solution, 50 cps; trade mark of Dow Chemical U.S.A.

In preparing the varnish, the binder which is water soluble is added to a container and the water is added with stirring. The alcohol is then added. Alcohol is utilized as a component of the varnish in order to aid in drying of the ink. Where a water insoluble binder is to be utilized it is added to the varnish in a suitable solvent, e.g., EHEC in Propasol M. Preferably the water insoluble binder comprises about 4 to about 14 wt % of the binder; more preferably about 8 to about 12 wt %, for example 10 to 11 wt %. The use of larger amounts of EHEC results in a varnish which will not be wet by the test solution after the ink has been dried. The hydroxypropyl cellulose sold under the trade mark Methocel 4M, which has a viscosity of 4000 cps measured as a two percent solution, can be substituted for either of the materials referred to in Table IV. In a preferred method of preparing the varnish about one-third of the water is heated to about 98°C, and the hydroxypropyl cellulose is dissolved therein. The remaining water is gradually added with stirring.

The ink slurry composition can comprise about 2.6 to about 6.0 wt % magnesium sulphite. The cresolphthalein will be present in an amount such that the above described ratios are met. The amount of inert filler is not critical, but will general comprise O to 5 wt % of the ink slurry, for example about 3 to about 4 wt %. The remainder of the ink slurry will comprise varnish and such additional solvent as may be desired to control the viscosity of the slurry. It will be appreciated that the viscosity of the ink may vary over a wide range depending on the method of application. A typical ink composition is shown in Table V.

TABLE V

| COMPONENT | WEIGHT (%) |
|---|---|
| Varnish | 89.5 |
| Titanium dioxide | 3.5 |
| Ethanol | 2.3 |
| Magnesium sulphite | 4.3 |
| Cresolphthalein | 0.4 |

The ink can be applied to the substrate by any printing method such as roller coating. After drying, the substrate can be used to test for residual glutaraldehyde in wash solution. Surprisingly the composition of Table V is sensitive over a glutaraldehyde range of 4 to 20000 ppm.

The indicator can comprise a paper substrate coated with the ink, the substrate being then adhered to a strip of film acting as a handle for dipping the ink coated substrate into the glutaraldehyde wash solution. In another embodiment the ink may be applied directly to a polymeric film.

## Claims

1. A glutaraldehyde indicator composition comprising a filler, a sulphite and a pH indicator comprising cresolphthalein, the ratio of sulphite to pH indicator being about 3:1 to about 5:1; said composition being suitable for measuring glutaraldehyde concentrations in the range of about 5 to 20 ppm when a predetermined amount of the composition is dissolved in sufficient glutaraldehyde containing water such that the concentration of sulphite in water is about 0.6 to about 1.4 mg.ml$^{-1}$.

2. A composition as claimed in claim 1, in tablet form.

3. A composition as claimed in claim 1, in powder form.

4. A glutaraldehyde indicator ink composition comprising a binder, a sulphite, a pH indicator comprising cresolphthalein and a vehicle, the ratio of sulphite to pH indicator being about 3:1 to about 5:1; the ink being suitable for measuring glutaraldehyde concentrations in the range of about 5 to 20 ppm when a predetermined amount of ink is treated with sufficient glutaraldehyde containing water such that the concentration of sulphite in water is about 0.6 to about 1.4 mg.ml$^{-1}$.

5. An indicating system composition for the colorimetric detection of glutaraldehyde in water comprising a sulphite and cresolphthalein as a pH indicator, the ratio of sulphite to pH indicator being about 3:1 to about 5:1; said indicating system being utilized in a water/glutaraldehyde solution to be tested in an amount such that the concentration of sulphite in the solution is about 0.6 to about 1.4 mg.ml$^{-1}$.

6. A device for detecting glutaraldehyde in a water solution which comprises:
   (a) a disposable syringe having a resilient plastic moulded body having a bulbar cavity, an inlet tube at one end of said body and communicating with the cavity, said bulbar cavity being finger pressure constrictable in volume so that upon release of pressure, a predetermined amount of glutaraldehyde solution is drawn into the cavity, and
   (b) a predetermined amount of an indicator system composition within said cavity, the composition comprising a sulphite and a cresolphthalein pH indicator wherein the ratio of sulphite to pH indicator is about 3:1 to about 5:1; the concentration of sulphite in the indicator system being such that upon dissolution of the indicator system in the predetermined amount of glutaraldehyde solution the concentration of sulphite in solution is about 0.6 mg.ml$^{-1}$ to about 1.4 mg.ml$^{-1}$;
   thereby indicating the presence of glutaraldehyde by a change in colour of the solution.

7. A device as claimed in claim 6, in which the indicating composition is applied as a spot of ink within the bulbar cavity.

8. A glutaraldehyde indicator ink composition comprising a binder, a sulphite, a pH indicator comprising cresolphthalein and a vehicle, the ratio of sulphite to pH indicator being about 3:1 to about 5:1; provided however, that where sulphite is magnesium sulphite, the ratio of sulphite to pH indicator is about 7:1 to about 12:1; the ink being suitable for measuring glutaraldehyde concentrations in the range of about 5 to 20 ppm and containing about 2.6 to about 6.0 wt % sulphite.

9. A glutaraldehyde indicator comprising a substrate which is coated with a composition as claimed in claim 8.

10. A method of detecting glutaraldehyde in solution, which comprises dissolving in the solution an indicator composition comprising a filler, a sulphite and a pH indicator comprising cresolphthalein, the ratio of sulphite to pH indicator being about 3:1 to about 5:1; the concentration of sulphite in the solution being from about 0.6 to about 1.4 mg.ml$^{-1}$.

FIG.1
PRIOR ART

FIG.2
PRIOR ART

FIG.3
PRIOR ART

FIG.4
PRIOR ART

FIG.5
PRIOR ART

FIG.6
PRIOR ART

| European Patent Office | EUROPEAN SEARCH REPORT | Application Number |
|---|---|---|
| | | EP 93 30 6799 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | GB-A-2 085 583 (ALBERT BROWNE LIMITED) * the whole document * | 1-6,8,10 | G01N31/22 |
| A | US-A-3 837 809 (A.W. CHAPMAN) * the whole document * | 1,4-6,8, 10 | |
| D,A | US-A-4 521 376 (R.J. WITONSKY ET AL) * the whole document * | 1,4-6,8, 10 | |
| D,A | US-A-3 732 079 (W.B. DAVIS) * abstract; figures 1-3 * | 6,7 | |

TECHNICAL FIELDS SEARCHED (Int. Cl.5 )

G01N

The present search report has been drawn up for all claims

| Place of search | Date of completion of the search | Examiner |
|---|---|---|
| BERLIN | 15 DECEMBER 1993 | JOHNSON K. |